(19) **Europäisches Patentamt**
**European Patent Office**
**Office européen des brevets**

(11) **EP 3 211 395 B1**

(12) **EUROPEAN PATENT SPECIFICATION**

(45) Date of publication and mention
of the grant of the patent:
**10.04.2019 Bulletin 2019/15**

(51) Int Cl.:
***G01M 3/28*** *(2006.01)*

(21) Application number: **16199670.7**

(22) Date of filing: **18.11.2016**

(54) **METHOD AND SYSTEM FOR DIAGNOSING HYDRAULIC MACHINE, HYDRAULIC MACHINE, AND RENEWABLE-ENERGY TYPE POWER GENERATING APPARATUS**

VERFAHREN UND SYSTEM ZUR DIAGNOSE EINER HYDRAULISCHEN MASCHINE, HYDRAULISCHE MASCHINE UND LEISTUNGSERZEUGUNGSVORRICHTUNG FÜR ERNEUERBARE ENERGIE

PROCÉDÉ ET SYSTÈME DE DIAGNOSTIC POUR MACHINE HYDRAULIQUE, MACHINE HYDRAULIQUE ET GÉNÉRATEUR DE PUISSANCE DE TYPE À ÉNERGIE RENOUVELABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2016 JP 2016035549**

(43) Date of publication of application:
**30.08.2017 Bulletin 2017/35**

(73) Proprietor: **Mitsubishi Heavy Industries, Ltd. Tokyo 108-8215 (JP)**

(72) Inventors:
• **Hayashi, Toshikazu**
**Tokyo, 108-8215 (JP)**

• **Yuge, Atsushi**
**Tokyo, 108-8215 (JP)**
• **Noguchi, Toshihide**
**Tokyo, 108-8215 (JP)**
• **Kawabata, Shinji**
**Tokyo, 108-8215 (JP)**

(74) Representative: **Henkel, Breuer & Partner Patentanwälte**
**Maximiliansplatz 21**
**80333 München (DE)**

(56) References cited:
**EP-A1- 2 889 480     JP-A- S6 199 833**

**Description**

TECHNICAL FIELD

The present disclosure relates to a method and a system for diagnosing a hydraulic machine, a hydraulic machine, and a renewable-energy type power generating apparatus.

BACKGROUND ART

A hydraulic machine such as a hydraulic pump and a hydraulic motor has been known.

For instance, US 2010/0040470A discloses a hydraulic machine which performs conversion between fluid energy of working fluid and rotational energy of a rotary shaft, by utilizing a cyclic volume change of a working chamber formed by a cylinder and a piston.

EP 2206940A discloses a hydraulic machine provided with a poppet valve as a low-pressure valve for switching a communication state between a working chamber and a low-pressure line outside the working chamber.

JP S61-99833A discloses valve seat inspection apparatus which is configured so that air with a predetermined pressure is supplied to a chamber in the form of a sealed annular space surrounded by a valve seat, a valve body, and a seal member provided around the valve via a tube and a passage in the valve body so that the pressure of the space is measured by an air-pressure measuring device connected to the tube. If a slight gap is generated between an inclined surface of the valve body that is in contact with a valve seat and the contact surface of the valve seat the air inside the chamber leaks from the space. As a result, the air pressure measuring device connected to the tube indicates that the pressure of the air inside the chamber decreases. Based on the detected decrease of the pressure the operator can judge whether or not the valve seat is defective.

EP 2889480 A1 discloses a diagnostic system of a hydraulic machine which is configured, for example, to determine occurrence of abnormality of the high-pressure valve when the period in which the pressure inside the working chamber is high is longer than the period of normal operation of the hydraulic machine, and to determine abnormality of the high-pressure valve or the low-pressure valve on the basis of the deviation of the time delay TD of the pressure of the working chamber from the ideal delay time TD0 during the normal operation of the hydraulic machine.

SUMMARY

In case of damage to a valve in a hydraulic machine, the damage may bring about deterioration of performance of the hydraulic machine. To prevent deterioration of performance of a hydraulic machine, it is important to detect a damage of a valve appropriately.

In view of the above, an object of at least one embodiment of the present invention is to provide a method of diagnosing a hydraulic machine, whereby it is possible to detect a damage of a low-pressure valve appropriately.

(1) A method, according to the present invention, of diagnosing a hydraulic machine comprises the features of claim 1, wherein the hydraulic machine comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston, comprises: a pressure-measuring step of detecting a pressure of the working chamber; and a damage-detecting step of detecting a damage of the low-pressure valve on the basis of a pressure detection result obtained in the pressure-measuring step. The low-pressure valve is a poppet valve which is disposed between a low-pressure line of the hydraulic machine and the working chamber, and which is for controlling a communicating state between the low-pressure line and the working chamber. The damage-detecting step comprises detecting the damage of the low-pressure valve on the basis of a change rate of a pressure of the working chamber in each cycle of the reciprocal motion of the piston.

In a typical hydraulic machine, a pressure inside a working chamber cyclically changes in accordance with reciprocal motion of a piston. As a result of intensive researches by the present inventors, it was found that a change rate of a pressure inside a working chamber varies depending on the state of a low-pressure valve. The reason for this can be as follows. If a valve body of a low-pressure valve is damaged from abrasion, erosion, or the like, a passage is formed locally at the damaged portion of the low-pressure valve to permit working oil to flow through, and the working oil leaks from the working chamber toward the low-pressure line through the passage.

In this regard, leakage of working oil via the low-pressure valve can be detected and thus a damage of the low-pressure valve can be detected, on the basis of the change rate of the working-chamber pressure in each cycle of the reciprocal motion of the piston obtained from a result of measurement of the working-chamber pressure.

(2) In the invention, the damage-detecting step comprises detecting the damage of the low-pressure valve on the basis of a maximum value of the change rate of the pressure of the working chamber in each cycle of the reciprocal motion of the piston.

According to the findings of the present inventors, if a damage exists in the low-pressure valve, which is a poppet valve, the pressure change rate (pressure increase rate) during an increase in the working-chamber pressure is small, as compared to a case where no damage exists in the low-pressure valve. Thus, it is possible to detect a damage of the low-pressure valve appropriately on the basis of the maximum value of the change rate of the pressure of the working chamber in each cycle of the reciprocal motion of the piston.

(3) In the invention, the damage-detecting step comprises detecting the damage of the low-pressure valve on the basis of an index obtained by dividing the maximum value of the change rate of the pressure of the working chamber by a speed of the piston at the time when the change rate of the pressure of the working chamber is at the maximum value.

A change rate of the working-chamber pressure decreases in response to leakage of working oil due to a damage of the low-pressure valve, and has a correlation with the piston speed. In this regard, the maximum value of the change rate of the working-chamber pressure is divided by the speed of the piston at the time when the change rate of the working-chamber pressure is at its maximum, and thereby an index excluding an influence from the piston speed is obtained. Accordingly, it is possible to exclude an influence from the piston speed and detect a damage of the low-pressure valve appropriately.

(4) In the invention, the index is a normalized value represented by the following expression:

$$(dP/dt)_{max} \times V_{ref} / V^*$$

where $(dP/dt)_{max}$ is the maximum value of the change rate of the pressure of the working chamber, $V_{ref}$ is a speed of the piston at a predetermined position, and $V^*$ is the speed of the piston at the time when the change rate of the pressure of the working chamber is at the maximum value $(dP/dt)_{max}$.

According to the invention, a normalized value, which is an index of the same dimension as the change rate of the working-chamber pressure, is obtained by using the piston speed $V_{ref}$ at a predetermined position of the piston, and thereby it is possible to evaluate a damage of the low-pressure valve from a parameter of the same dimension as the change rate of the working chamber by using the normalized value.

(5) In some embodiments, the damage-detecting step comprises determining that a damage of the low-pressure valve exists if the maximum value of the change rate of the pressure of the working chamber or the index is at a threshold or less.

According to the above method (5), it is determined that a damage exists in the low-pressure valve if the maximum value of the change rate of the working-chamber pressure or the index based on the maximum value of the change rate of the working-chamber pressure is relatively small, and thereby it is possible to detect a damage of the low-pressure valve appropriately.

(6) In some embodiments, the method further comprises a threshold-setting step of setting a threshold on the basis of a maximum value of the change rate of the pressure of the working chamber in an initial state of the low-pressure valve. The damage-detecting step comprises detecting the damage of the low-pressure valve on the basis of a result of comparison between the maximum value of the change rate of the pressure of the working chamber or the index and the threshold determined in the threshold-setting step.

According to the above method (6), a threshold is determined on the basis of the maximum value of the change rate of the working-chamber pressure in an initial state of the low-pressure valve, and thereby it is possible to set an appropriate threshold individually for each low-pressure valve.

(7) In some embodiments, the method further comprises permitting the cylinder corresponding to the low-pressure valve to be in an inactive state of not generating a displacement, or replacing the low-pressure valve, if a damage of the low-pressure valve is detected in the damage-detecting step.

According to the above method (7), if a damage of the low-pressure valve is detected, the cylinder corresponding to the low-pressure valve is caused to be in an inactive state, or the low-pressure valve is replaced. In this way, it is possible to operate the hydraulic machine while suppressing deterioration of performance of the hydraulic machine.

(8) A diagnosis system according to the present invention is for a hydraulic machine which comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston, and comprises the features of claim 5, including: a pressure sensor of detecting a pressure of the working chamber; and a damage-detecting part configured to detect a damage of the low-pressure valve on the basis of a detection result obtained by the pressure sensor. The low-pressure valve is a poppet valve which is disposed between a low-pressure line of the hydraulic machine and the working chamber and which is for controlling a communicating state between the low-pressure line and the working chamber. The damage-detecting part is configured to detect the damage of the low-pressure valve on the basis of a change rate of a pressure of the working chamber in each cycle of the reciprocal motion of the piston.

As a result of intensive researches by the present inventors, it was found that a change rate of a pressure inside a working chamber varies depending on the state of a low-pressure valve. The reason for this can be considered as follows. If a valve body of a low-pressure valve is damaged from abrasion, erosion, or the like, a passage is formed locally at the damaged portion of the low-pressure valve to permit working oil to flow through, and the working oil leaks from the working chamber toward the low-pressure line through the passage.

In this regard, with the above configuration (8), leakage of working oil via the low-pressure valve can be detected and thus a damage of the low-pressure valve can be detected, on the basis of the change rate of the working-chamber pressure in each cycle of the reciprocal motion of the piston obtained from a result of measurement of the working-chamber pressure.

(9) In the above configuration, the damage-detecting part is configured to detect the damage of the low-pressure valve on the basis of a maximum value of the change rate of the pressure of the working chamber in each cycle of the reciprocal motion of the piston.

According to the findings of the present inventors, if a damage exists in the low-pressure valve, which is a poppet valve, the pressure change rate (pressure increase rate) during an increase in the working-chamber pressure is small as compared to a case where no damage exists in the low-pressure valve. Thus, it is possible to detect a damage of the low-pressure valve on the basis of the maximum value of the change rate of the pressure of the working chamber in each cycle of the reciprocal motion of the piston.

(10) In the diagnosis system according to the invention, the damage-detecting part is configured to detect the damage of the low-pressure valve on the basis of an index obtained by dividing the maximum value of the change rate of the pressure of the working chamber by a speed of the piston at the time when the change rate of the pressure of the working chamber is at the maximum value.

A change rate of the working-chamber pressure decreases in response to leakage of working oil due to a damage of the low-pressure valve, and has a correlation with the piston speed. In this regard, the maximum value of the change rate of the pressure of the working chamber is divided by the speed of the piston at the time when the change rate of the pressure of the working chamber is at its maximum, and thereby an index excluding an influence from the piston speed is obtained. Accordingly, it is possible to exclude an influence from the piston speed and detect a damage of the low-pressure valve appropriately.

(11) In some embodiments, the damage-detecting part is configured to determine that a damage of the low-pressure valve exists if the maximum value of the change rate of the pressure of the working chamber or the index is at a threshold or less.

With the above configuration, it is determined that a damage exists in the low-pressure valve if the maximum value of the change rate of the working-chamber pressure or the index based on the maximum value of the change rate of the working-chamber pressure is relatively small, and thereby it is possible to detect a damage of the low-pressure valve appropriately.

(12) In some embodiments, the diagnosis system further comprises a threshold-setting part configured to set a threshold on the basis of a maximum value of the change rate of the pressure of the working chamber in an initial state of the low-pressure valve. The damage-detecting part is configured to detect the damage of the low-pressure valve on the basis of a result of comparison between the maximum value of the change rate of the pressure of the working chamber or the index and the threshold determined by the threshold-setting part.

According to the above configuration, a threshold is determined on the basis of the maximum value of the change rate of the working-chamber pressure in an initial state of the low-pressure valve, and thereby it is possible to set an appropriate threshold individually for each low-pressure valve.

(13) In some embodiments, if a damage of the low-pressure valve is detected by the damage-detecting part, the cylinder corresponding to the low-pressure valve is brought into an inactive state of not generating a displacement. According to the above configuration, if a damage of the low-pressure valve is detected, the cylinder corresponding to the low-pressure valve is caused to be in an inactive state, or the low-pressure valve is replaced. In this way, it is possible to operate the hydraulic machine while suppressing deterioration of performance of the hydraulic machine.

(14) A hydraulic machine according to the present invention comprises: a rotor shaft; a cylinder; a piston forming a working chamber together with the cylinder; a high-pressure valve and a low-pressure valve provided for the working chamber; and the diagnosis system according to the invention.

As a result of intensive researches by the present inventors, it was found that a change rate of a pressure inside a working chamber varies depending on the state of a low-pressure valve. The reason for this can be considered as follows. If a valve body of a low-pressure valve is damaged from abrasion, erosion, or the like, a passage is formed locally at the damaged portion of the low-pressure valve to permit working oil to flow through, and the working oil leaks from the working chamber toward the low-pressure line through the passage.

In this regard, leakage of working oil via the low-pressure valve can be detected and thus a damage of the low-pressure valve can be detected, on the basis of the change rate of the working-chamber pressure in each cycle of the reciprocal motion of the piston obtained from a result of measurement of the working-chamber pressure.

(15) A renewable-energy type power generating apparatus according to the present invention comprises: a rotor configured to receive renewable energy to rotate; a hydraulic pump configured be driven by the rotor to pressurize working oil; a hydraulic motor configured to be driven by the working oil pressurized by the hydraulic pump; a high-pressure line connecting an outlet of the hydraulic pump and an inlet of the hydraulic motor; a low-pressure line connecting an outlet of the hydraulic motor and an inlet of the hydraulic pump; and a generator configured to be driven by the hydraulic motor. At least one of the hydraulic pump or the hydraulic motor is the hydraulic machine according to the invention.

As a result of intensive researches by the present inventors, it was found that a change rate of a pressure inside a working chamber varies depending on the state of a low-pressure valve. The reason for this can be considered as follows. If a valve body of a low-pressure valve is damaged from abrasion, erosion, or the like, a passage is formed locally at the damaged portion of the low-pressure valve to permit working oil to flow through, and the working oil leaks from the working chamber toward the low-pressure line through the passage.

In this regard, leakage of working oil via the low-pressure valve can be detected and thus a damage of the low-pressure valve can be detected, on the basis of the change rate of the working-chamber pressure in each cycle of the reciprocal motion of the piston obtained from a result of measurement of the working-chamber pressure.

According to at least one embodiment of the present invention, provided is a method of diagnosing a hydraulic machine, whereby it is possible to detect a damage of a low-pressure valve appropriately.

BRIEF DESCRIPTION OF DRAWINGS

FIG. 1 is a schematic diagram of a wind turbine power generating apparatus according to an embodiment.
FIG. 2 is a schematic configuration diagram of a hydraulic motor (hydraulic machine) according to an embodiment.
FIG. 3 is a schematic configuration diagram of a diagnosis system according to an embodiment.
FIG. 4 is a schematic cross-sectional view of a configuration of a high-pressure valve and a low-pressure valve according to an embodiment.
FIG. 5 is a chart showing opening-and-closing behavior of a high-pressure valve and a low-pressure valve as well as a pressure change inside a working chamber, during operation of a hydraulic motor according to an embodiment.
FIG. 6 is an enlarged view of a low-pressure valve depicted in FIG. 4.
FIG. 7 is a flowchart schematically showing a method of diagnosing a hydraulic machine according to an embodiment.
FIG. 8 is a flowchart showing a process of a damage-detecting step according to an embodiment.
FIG. 9 is a graph showing a correlation between a piston-phase angle and a cylinder pressure in a hydraulic machine (hydraulic motor) according to an embodiment.
FIG. 10 is a flowchart showing a process of a damage-detecting step according to an embodiment.
FIG. 11 is a graph showing the maximum value of a cylinder-pressure change rate for each closing angle of a low-pressure valve according to an embodiment.
FIG. 12 is a graph showing an example of comparison between the maximum value and the normalized value (index) of the cylinder-pressure change rate.
FIG. 13 is a graph comparing the normalized value (index) of the maximum value of the cylinder-pressure change rate between cylinders of a hydraulic machine (hydraulic motor).

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

First, an overall configuration of a wind turbine power generating apparatus will be described. The wind turbine power generating apparatus includes a hydraulic machine (hydraulic motor) to which the diagnosis system and a diagnosis method according to an embodiment are to be applied.

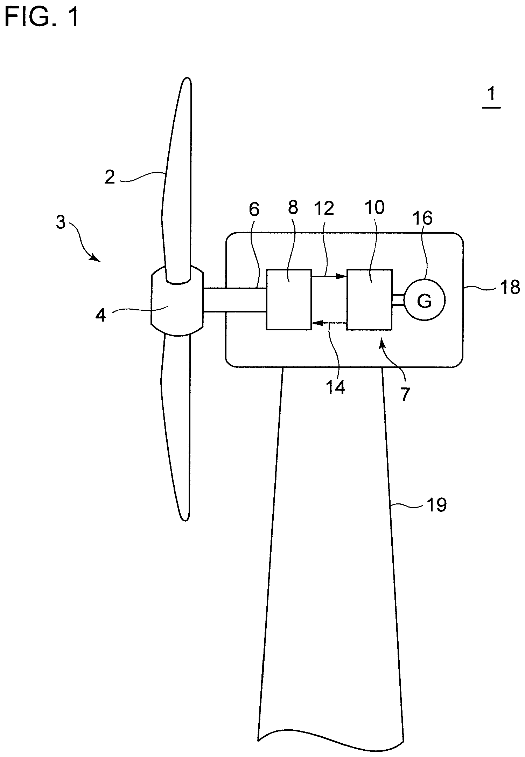

FIG. 1 is a schematic diagram of a wind turbine power generating apparatus according to an embodiment. As illustrated in the drawing, the wind turbine power generating apparatus 1 includes a rotor 3 configured to receive wind, which is a renewable energy, to rotate, a hydraulic transmission 7 for transmitting rotation of the rotor 3, and a generator 16 for generating electric power.

The rotor 3 includes at least one blade 2, and a hub 4 to which the at least one blade 2 is mounted.

The hydraulic transmission 7 includes a hydraulic pump 8 connected to the rotor 3 via a rotor shaft 6, a hydraulic motor 10, and a high-pressure line 12 and a low-pressure line 14 connecting the hydraulic pump 8 and the hydraulic motor 10.

The generator 16 is coupled to the hydraulic motor 10 via an output shaft of the hydraulic motor 10. In an embodiment, the generator 16 is a synchronous generator connected to a utility grid and driven by the hydraulic motor 10.

The hydraulic pump 8, the hydraulic motor 10, and the generator 16 may be disposed inside a nacelle 18 disposed on a tower 19.

In the wind turbine power generating apparatus 1 illustrated in FIG. 1, rotational energy of the rotor 3 is inputted into the generator 16 via the hydraulic transmission 7 including the hydraulic pump 8 and the hydraulic motor 10, and electric power is generated by the generator 16.

When the at least one blade 2 receives wind, the entire rotor 3 rotates in response to the power of the wind, so that the hydraulic pump 8 is driven by the rotor 3 to pressurize working oil, thereby producing high-pressure working oil (pressurized oil). The pressurized oil produced by the hydraulic pump 8 is supplied to the hydraulic motor 10 via the high-pressure line 12, and drives the hydraulic motor 10. Electric power is generated by the generator 16 connected to the hydraulic motor 10 via the output shaft. The low-pressure working oil having performed work in the hydraulic motor 10 flows again into the hydraulic pump 8 via the low-pressure line 14.

The hydraulic pump 8 and the hydraulic motor 10 may be of variable-displacement type with an adjustable displacement.

Next, configuration of a hydraulic machine and a diagnosis system for a hydraulic machine according to an embodiment will be described. A hydraulic motor will be described hereinafter as an example of a hydraulic machine, but the same description can be applied to a hydraulic pump as well.

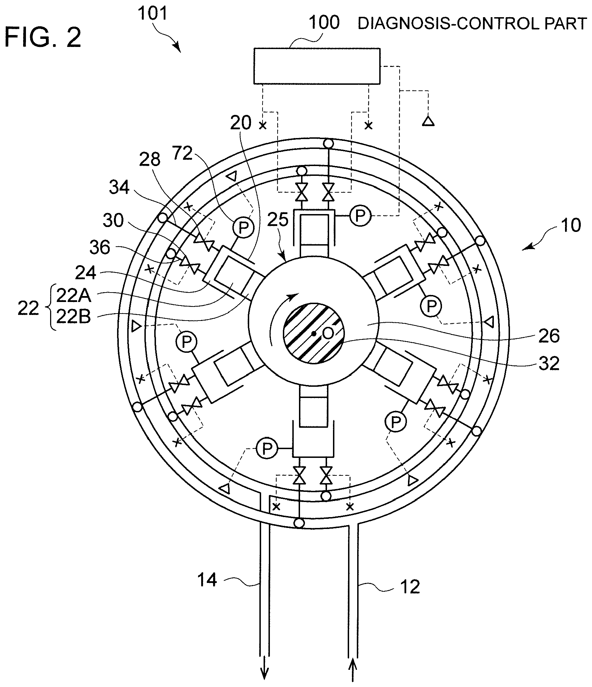

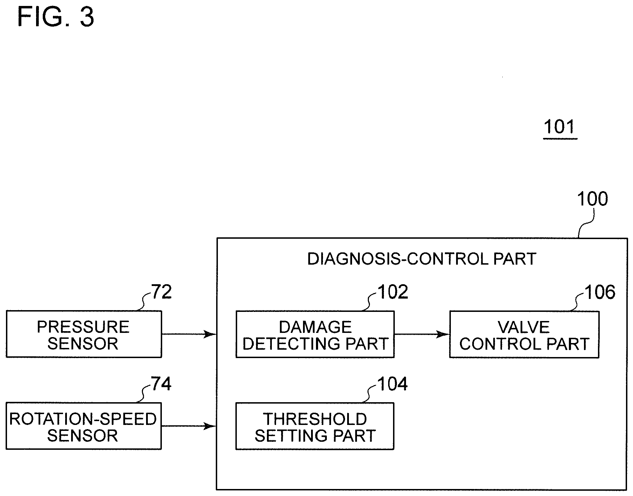

FIG. 2 is a schematic configuration diagram of a hydraulic motor (hydraulic machine) according to an embodiment, and FIG. 3 is a schematic configuration diagram of a diagnosis system according to an embodiment.

As illustrated in FIG. 2, the hydraulic motor 10 to be diagnosed by a diagnosis system and a diagnosis method according to an embodiment includes a rotor shaft 32, a cylinder 20, a piston 22 forming a working chamber 24 with the cylinder 20, a high-pressure valve 28 and a low-pressure valve 30 provided for the working chamber 24, and a cam 26 (conversion mechanism) for converting motion between the reciprocal motion of the piston 22 and the rotational motion of the rotor shaft 32. The cam 26 has a cam curved surface configured to contact the piston 22.

In the hydraulic motor 10, a plurality of cylinders 20 and a plurality of pistons 22 are disposed along the circumferential direction of the hydraulic motor 10.

The piston 22 preferably includes a piston body 22A which slides inside the cylinder 20, and a piston roller or a piston shoe which is attached to the piston body 22A and which contacts the cam curved surface of the cam 26, from the viewpoint of smooth conversion of the reciprocal motion of the piston 22 into the rotational motion of the rotor shaft 32. In the example illustrated in FIG. 2, the piston 22 includes a piston body 22A and a piston shoe 22B.

The cam 26 is an eccentric cam disposed eccentrically from the axial center O of the rotor shaft (crank shaft) 32 of the hydraulic motor 10. While the piston 22 performs a set of upward and downward movement, the cam 26 and the rotor shaft 32 to which the cam 26 is mounted perform one revolution.

In another embodiment, the cam 26 is an annular-shaped multi-lobed cam (ring cam) with a plurality of lobes. In this case, while the cam 26 and the rotor shaft 32 to which the cam 26 is mounted perform one revolution, the piston 22 performs as many sets of upward and downward movement as the number of lobes.

The high-pressure valve 28 is disposed in a high-pressure communication line 34 between the working chamber 24 and the high-pressure line 12 disposed outside the working chamber 24, and configured to be capable of switching the communication state between the working chamber 24 and the high-pressure line 12. The low-pressure valve 30 is disposed in a low-pressure communication line 36 between the working chamber 24 and the low-pressure line 14 disposed outside the working chamber 24, and configured to be capable of switching the communication state between the working chamber 24 and the low-pressure line 14.

A diagnosis system 101 of the hydraulic motor 10 depicted in FIGs. 2 and 3 includes a pressure sensor 72 for detecting a pressure of each working chamber 24, a rotation-speed sensor 74 for detecting a rotation speed of the rotor shaft 32, and a diagnosis-control part 100 for diagnosing and controlling the hydraulic motor 10 on the basis of a result of detection by the pressure sensor 72 and/or the rotation-speed sensor 74.

The diagnosis-control part 100 of the diagnosis system 101 includes a damage-detecting part 102, a threshold-setting part 104, and a valve control part 106, and the diagnosis system 101 is configured to detect a damage of the low-pressure valve 30 of the hydraulic motor 10 as described below.

In the hydraulic motor 10 depicted in FIG. 2, valves are controlled in accordance with reciprocal motion of a piston, so that a pressure of the working chamber 24, also referred to as a working-chamber pressure hereinafter, changes cyclically in accordance with the reciprocal motion of the piston 22. Now, configuration of the high-pressure valve 28 and the low-pressure valve 30 of the hydraulic motor 10 will be described, along with a cyclic change of the working-chamber pressure caused by an opening-closing control on the valves.

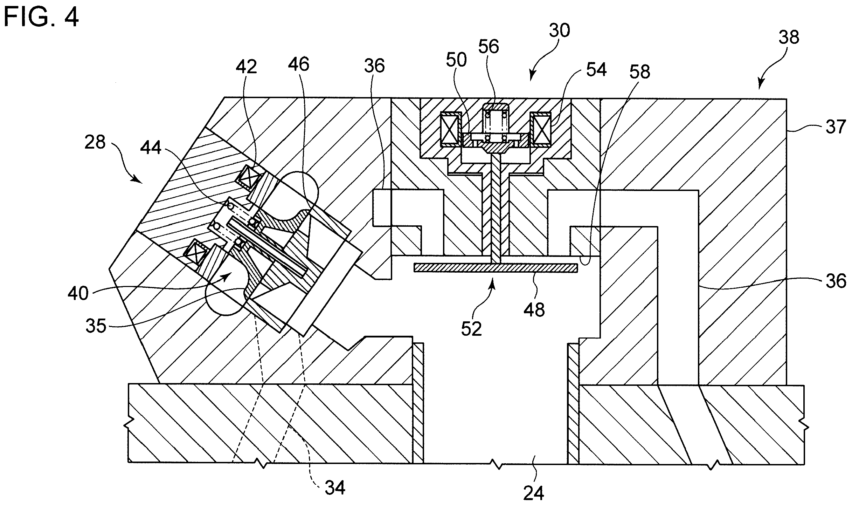

FIG. 4 is a schematic cross-sectional view of a configuration of the high-pressure valve 28 and the low-pressure valve 30. FIG. 4 is a view of a situation in which the high-pressure valve 28 is closed and the low-pressure valve 30 is open. In some embodiments, as depicted in FIG. 4, the high-pressure valve 28, the low-pressure valve 30, and a casing 37 of the valves may be unitized and configured as a valve unit 38.

The high-pressure valve 28 illustrated in FIG. 4 includes a movable unit 40 including a valve body 35, a solenoid coil 42 that functions as an actuator for moving the movable unit 40 between a valve-open position and a valve-closed position, a spring 44, and a valve seat 46. The high-pressure valve 28 is a poppet solenoid valve of normally-closed type, with the valve seat 46 disposed at a working-chamber 24 side of the valve body 35. The high-pressure valve 28 is capable of switching the communication state between the working chamber 24 and the high-pressure line 12 (see FIG. 2) by movement of the movable unit 40 caused by an electromagnetic force of the solenoid coil 42 or a biasing force of the spring 44.

The low-pressure valve 30 illustrated in FIG. 4 includes a movable unit 52 including a valve body 48 and an armature 50, a solenoid coil 54, a spring 56, and a valve seat 58. The low-pressure valve 30 is a poppet solenoid valve (poppet valve) of normally-open type, with the valve body 48 disposed at a working-chamber 24 side of the valve seat 58. The low-pressure valve 30 is capable of switching the communication state between the working chamber 24 and the low-pressure line 14 (see FIG. 2) by movement of the movable unit 52 caused by an electromagnetic force of the solenoid coil 54 or a biasing force of the spring 56.

The high-pressure valve 28 and the low-pressure valve 30 are controlled to open and close by control signals (opening/closing command) sent from a valve controller. In some embodiments, the valve control part 106 (see FIG. 3) of the diagnosis-control part 100 provides the high-pressure valve 28 and the low-pressure valve 30 with control signals for the opening/closing command.

When the high-pressure valve 28 is not excited by a control signal from the valve control part 106, the movable unit 40 is biased toward the valve seat 46 by the spring 44, so as to be retained in a position where the working chamber 24 and the high-pressure line 12 are not in communication (normal position; the position of the movable unit 40 depicted in FIG. 4). When the high-pressure valve 28 is excited by a control signal from the valve control part 106, the movable unit 40 moves to a position (excitation position) where the working chamber 24 and the high-pressure line 12 communicate with each other by the electromagnetic force, against the biasing force of the spring 44. In other words, the high-pressure valve 28 is configured such that the valve body is movable by the supply control of the excitation current, between the normal position, where the excitation current is not supplied, and the excitation position, where the excitation current is supplied.

Furthermore, if the low-pressure valve 30 is not excited by a control signal from the valve control part 106, the movable unit 52 is biased in a direction away from the valve seat 58 by the spring 56, so as to be retained in a valve-open position where the working chamber 24 and the low-pressure line 14 are in communication with each other (normal position; the position of the movable unit 52 depicted in FIG. 4). If the low-pressure valve 30 is excited by a control signal from the valve control part 106, the electromagnetic force of the solenoid coil 54 attracts the armature 50 and the movable unit 52 moves toward the valve seat 58 by the electromagnetic force against the biasing force of the spring 56, thereby moving to a valve-closed position (excitation position) where the working chamber 24 and the high-pressure line 12 are not in communication. In other words, the low-pressure valve 30 is configured such that the valve body is movable by the supply control of the excitation current, between the normal position, where the excitation current is not supplied, and the excitation position, where the excitation current is supplied.

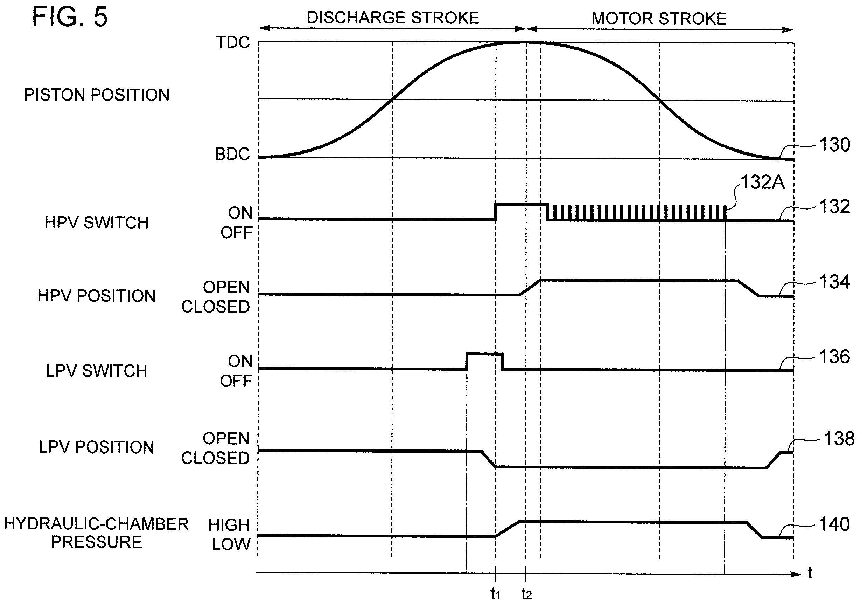

In the hydraulic motor 10 having the high-pressure valve 28 and the low-pressure valve 30 of the above described configuration, a working-chamber pressure changes cyclically in accordance with the reciprocal motion of the piston 22 due to the opening-and-closing control on the high-pressure valve 28 and the low-pressure valve 30. FIG. 5 is a chart showing opening-and-closing behavior of the high-pressure valve 28 and the low-pressure valve 30 as well as a pressure change inside the working chamber 24, during operation of the hydraulic motor 10.

In FIG. 5, a piston-cycle curve 130 represents a temporal change of the position of the piston 22, where x-axis is time t. Furthermore, the drawing includes: a high-pressure valve (HPV) control signal 132 representing a control signal that is to be supplied to the high-pressure valve 28; a high-pressure valve position 134 representing an open/closed state of the high-pressure valve 28; a low-pressure valve (LPV) control signal 136 representing a control signal that is to be supplied to the low-pressure valve 30; a low-pressure valve position 138 representing an open/closed state of the low-pressure valve 30; and a pressure curve 140 representing a pressure in the working chamber 24.

In the hydraulic motor 10, as represented by the piston-cycle curve 130 in FIG. 5, the differential pressure between the high-pressure line 12 and the low-pressure line 14 created by the hydraulic pump 8 moves the pistons 22 upward and downward cyclically, so that each piston 22 repeats a discharge stroke of moving toward the top dead center from the bottom dead center and a motor stroke of moving toward the bottom dead center from the top dead center.

As depicted in FIG. 5, during the discharge stroke in which the piston 22 moves from the bottom dead center to the top dead center, the high-pressure valve 28 is closed and the low-pressure valve 30 is open, so that working oil in the working chamber 24 is discharged to the low-pressure line 14 via the low-pressure valve 30.

If the low-pressure valve 30 is excited and closed just before the piston 22 reaches the top dead center, the working chamber 24 is pressurized after the closure until the piston 22 reaches the top dead center, and thereby the working-chamber pressure increases. During this time, supply of excitation current to the low-pressure valve 30 becomes stopped before the piston 22 reaches the top dead center, but the low-pressure valve 30 is kept closed by a pressure differential between the working chamber 24 and the low-pressure line 14 because the pressure inside the working chamber 24 is increasing.

Furthermore, while the low-pressure valve 30 is closed and the working-chamber pressure increases just before the piston 22 reaches the top dead center, an HPV control signal is applied to the high-pressure valve 28 (i.e., excitation current is supplied to the high-pressure valve 28), and the high-pressure valve 28 opens.

Once the high-pressure valve 28 opens, high-pressure oil flows in to the working chamber 24 from the high-pressure line 12 through the high-pressure valve 28, and rotates the cam 26 via the piston 22. In other words, the piston 22 reaches the top dead center and the hydraulic motor 10 proceeds to a motor stroke.

In the motor stroke, while high-pressure oil flows into the working chamber 24 through the high-pressure valve 28, the pressure inside the working chamber 24 is maintained at a high pressure. During this time, the low-pressure valve 30 is kept closed by a pressure differential between opposite sides of the valve body 48 (i.e. pressure differential between the working chamber 24 and the low-pressure line 14).

Then, when the supply of a pulse voltage signal (PWM signal) to the high-pressure valve 28 is stopped just before the piston 22 reaches the bottom dead center, the high-pressure valve 28 closes and the pressure in the working chamber 24 decreases, with the working chamber 24 continuously expanding. As a result, the differential pressure between the working chamber 24 and the low-pressure line 14 reduces, and thereby the low-pressure valve 30 automatically opens.

The final pulse 132A of the high-frequency signal repeating excitation and non-excitation of the high-pressure valve 28 may be regarded as a control signal (closing command) for switching the high-pressure valve 28 from an open state to a closed state.

If a hydraulic machine is configured as described above such that the working-chamber pressure changes cyclically in accordance with the reciprocal motion of the piston 22 by the opening/closing control on the high-pressure valve 28 and the low-pressure valve 30, a damage such as erosion may develop on the valve body 48 (poppet) of the low-pressure valve 30.

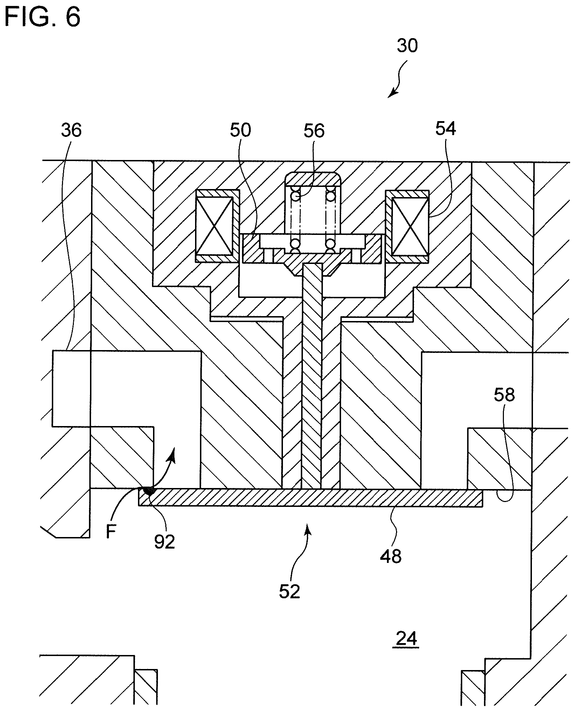

FIG. 6 is an enlarged view of the low-pressure valve 30 depicted in FIG. 4.

For instance, in the above described hydraulic machine (hydraulic motor 10), erosion (abrasion) 92 (see FIG. 6) may develop on the valve body 48 due to a high-speed vortex created by inclination of the valve body 48 at the time of closure of the low-pressure valve 30, or to a pressure decrease caused by oil-column separation after closure of the low-pressure valve 30. If a damage such as erosion 92 is generated on the valve body 48 as described above, a passage may be formed locally on a damaged part of the valve body 48 to permit working oil to flow through, and working oil F may leak toward the low-pressure line 14 (the side of the low-pressure communication line 36) from the working chamber 24 through the passage, as depicted in FIG. 6.

The present inventors conducted intensive researches and found that, if leakage via the damaged part of the valve body 48 of the low-pressure valve 30 occurs, a change rate of the working-chamber pressure (i.e., temporal differentiation of the working-chamber pressure) in the cyclic change of the working-chamber pressure accompanying the reciprocal motion of the piston 22 becomes different from that in a condition that the valve body 48 has no damaged part and leakage is not present.

In view of the above findings, in some embodiments, leakage of working oil via the low-pressure valve 30 is detected on the basis of the change rate of the working-chamber pressure in each cycle of the reciprocal motion of the piston 22 obtained by a result of measurement of the working-chamber pressure, and thereby a damage of the low-pressure valve 30 is detected.

A diagnosis method for detection of a damage of the low-pressure valve 30 will now be described, for the hydraulic motor 10 described above as an example of a hydraulic machine. The diagnosis method according to an embodiment described below is performed by using the diagnosis system 101 (see FIGs. 2 and 3) described above.

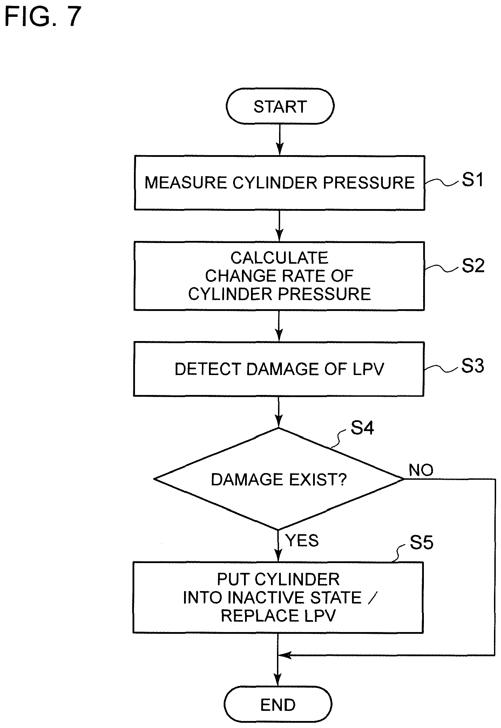

FIG. 7 is a flowchart schematically showing a method of diagnosing a hydraulic machine according to an embodiment.

As depicted in FIG. 7, in an embodiment, a pressure of the working chamber 24 (cylinder pressure) is measured by using the pressure sensor 72 (see FIGs. 2 and 3) (step S1).

Next, the damage-detecting part 102 (see FIG. 3) calculates a change rate of a pressure of the working chamber 24 (cylinder-pressure change rate) on the basis of the result of measurement obtained in step S1 (step S2). In an embodiment, in step S2, temporal differentiation of the cylinder pressure is calculated as a cylinder-pressure change rate from time-series data of the cylinder pressure measured in step S1.

Then, the damage-detecting part 102 (see FIG. 3) detects a damage of the low-pressure valve 30 on the basis of the cylinder-pressure change rate calculated in step S2 (step S3).

If it is determined that a damage exists in the low-pressure valve 30 in step S3 (Yes in step S4), the cylinder 20 corresponding to the low-pressure valve 30 with a damage is brought into an inactive state of not generating a displacement, from among the cylinders 20 of the hydraulic machine, or the low-pressure valve 30 with a damage is replaced (step S5).

To bring the cylinder 20 of the hydraulic machine into an inactive state, the valve control part 106 (see FIG. 3) sends a suitable control signal of an opening/closing command to the high-pressure valve 28 and the low-pressure valve 30 corresponding to the cylinder 20.

To bring the cylinder 20 into an inactive state in the hydraulic machine (hydraulic motor 10 or a hydraulic pump), the high-pressure valve 28 corresponding to the cylinder 20 is kept closed, and the low-pressure valve 30 is kept open. Accordingly, the cylinder 20 and the high-pressure line 12 come into a non-communicating state, while the cylinder 20 and the low-pressure line 14 come into a communicating state, and thereby working oil only flows in and out between the working chamber 24 and the low-pressure line 14. Thus, the piston 22 corresponding to the cylinder 20 does not perform any substantial work, or, no substantial work is performed on the piston 22.

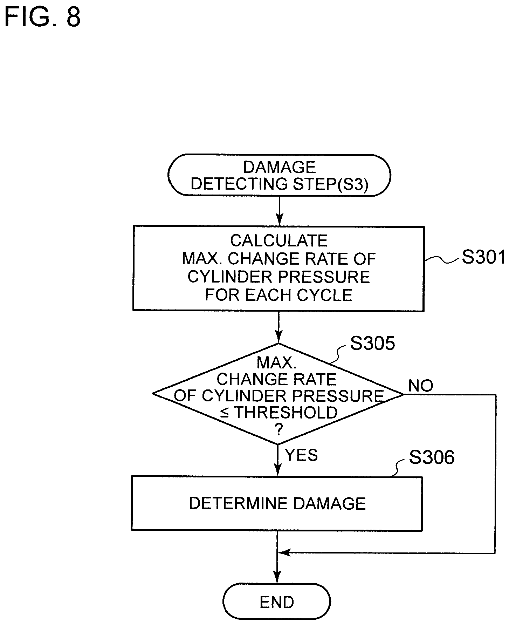

Next, the damage-detecting step (step S3) of detecting a damage of the low-pressure valve 30 in a diagnosis method according to some embodiments will be described in more detail with reference to FIGs. 8 to 13.

FIG. 8 is a flowchart showing a process of the damage-detecting step (step S3) according to an embodiment.

As shown in FIG. 8, in an embodiment, the maximum value of the cylinder-pressure change rate is calculated in each cycle of the reciprocal motion of the piston 22, on the basis of the cylinder-pressure change rate calculated in step S2 (step S301).

Then, if the maximum value of the cylinder-pressure change rate calculated in step S301 is at a threshold or less (Yes in step S305), it is determined that a damage exists in the low-pressure valve 30 (step S306).

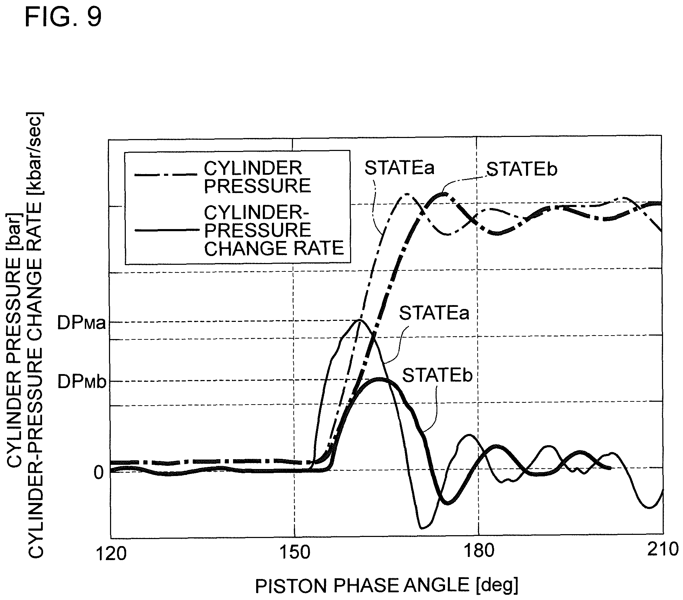

The principle of damage detection according to an embodiment depicted in FIG. 8 will now be described with reference to FIG. 9.

FIG. 9 is a graph showing a correlation of a piston-phase angle to a cylinder pressure and a cylinder-pressure change rate in a hydraulic machine (hydraulic motor 10). FIG. 9 shows a relationship of the phase angle of the piston 22 to a cylinder pressure and a cylinder-pressure change rate calculated from the cylinder pressure, for two different states "a" and "b" of the same cylinder 20.

It should be noted that the state "b" is a state at the time when the hydraulic machine (hydraulic motor 10) has been operated for a predetermined period after the time of the state "a".

As described above, during operation of the hydraulic motor 10, the cylinder pressure changes cyclically in accordance with the reciprocal motion of the piston 22 (see FIG. 5). The low-pressure valve 30 closes just before the piston 22 reaches the top dead center, and thereby the cylinder pressure (working-chamber pressure) increases (period $t_1$ to $t_2$ in FIG. 5).

The graph of FIG. 9 includes data of a period during which the cylinder pressure increases due to closure of the low-pressure valve 30. Specifically, the piston phase angle 180° of the graph of FIG. 9 represents that the piston 22 is at the top dead center, and the graph in FIG. 9 shows that the cylinder pressure increases just before the piston 22 reaches the top dead center.

As shown in the graph of FIG. 9, the increasing speed of the cylinder pressure is slower in the state "b" than in the state "a". Specifically, the maximum value $DP_{Mb}$ of the cylinder-pressure change rate in the state "b" is smaller than the maximum value $DP_{Ma}$ of the cylinder-pressure change rate in the state "a".

Accordingly, for the same cylinder 20, it can be said that the maximum value $P_M$ of the cylinder-pressure change rate tends to decrease as the operation period of the hydraulic machine becomes longer. This is because, as the operation period of the hydraulic machine becomes longer, a damage of the low-pressure valve 30 develops further (abrasion expands), which leads to an increase in an amount of leakage of working oil from the working chamber 24 through the damaged part of the low-pressure valve 30.

Accordingly, it is possible to determine appropriately presence of occurrence of a damage of the low-pressure valve 30, by setting an appropriate threshold for the maximum value $DP_M$ of the cylinder-pressure change rate, and comparing the threshold to the maximum value $DP_M$ of the cylinder-pressure change rate calculated in each cycle of the reciprocal motion of the piston 22 on the basis of the result of measurement of the cylinder pressure obtained in step S301.

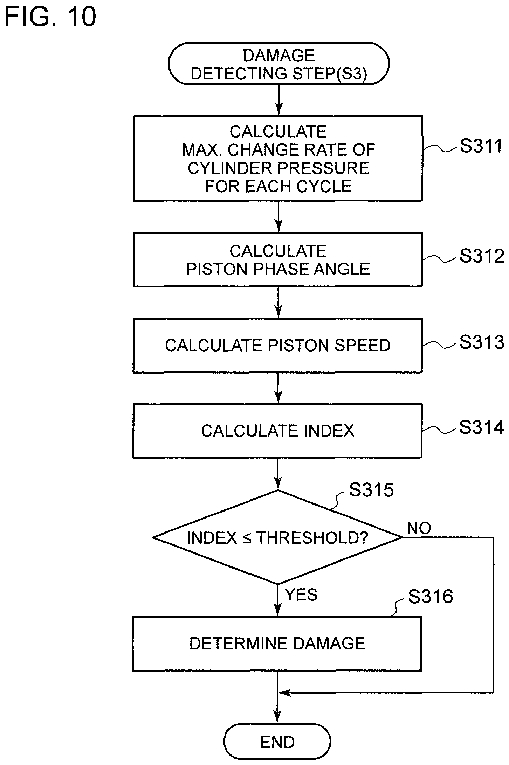

FIG. 10 is a flowchart showing a process of the damage-detecting step (step S3) according to anther embodiment.

As shown in FIG. 10, in an embodiment, the maximum value of the cylinder-pressure change rate is calculated in each cycle of the reciprocal motion of the piston 22, on the basis of the cylinder-pressure change rate calculated in step S2 (step S311).

Further, on the basis of a result of detection obtained by the rotation-speed sensor 74, a piston phase angle at which the cylinder-pressure change rate reaches its maximum is calculated in each cycle of the reciprocal motion of the piston 22 (step S312).

Next, a piston speed at the piston phase angle calculated in step S312 is calculated on the basis of the piston phase angle and the rotation speed of the hydraulic machine (hydraulic motor 10) obtained from the result of measurement of the rotation-speed sensor 74 (step S313).

Next, the maximum value of the cylinder-pressure change rate calculated in step S312 is divided by the piston speed calculated in step S313 to obtain an index (step S314).

Then, the index calculated in step S314 is compared to a threshold (step S315), and if the index is at the threshold or less (Yes in step S315), it is determined that a damage exists in the low-pressure valve 30 (step S316).

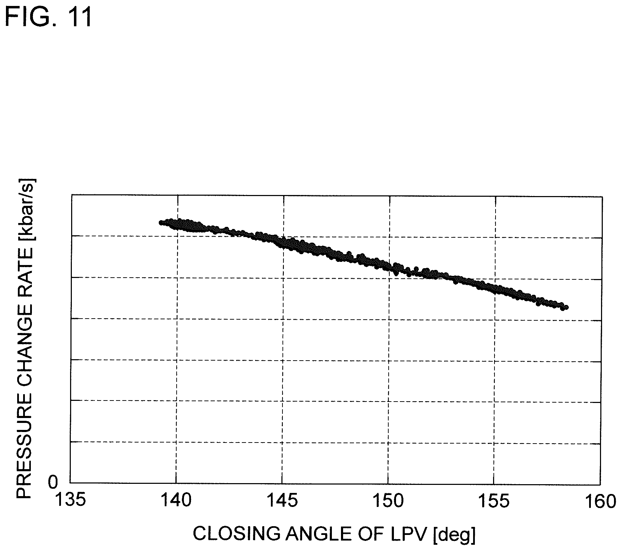

FIG. 11 is a graph showing the maximum value of the cylinder-pressure change rate for each closing angle of the low-pressure valve 30.

When the piston 22 is at a position just before the top dead center (i.e., when the piston 22 is moving from the bottom dead center toward the top dead center at a position just before the top dead center), the piston speed gradually decreases as the piston 22 approaches the top dead center.

Accordingly, as depicted in FIG. 11, the maximum value of the cylinder-pressure change rate decreases as a closing angle of the low-pressure valve gets closer to the top dead center (180°) from before the top dead center (less than 180°) (i.e., as the piston position at which the cylinder-pressure change rate reaches its maximum gets closer to the top dead center (180°) from before the top dead center (less than 180°)).

In this regard, in the above described embodiment, in step S314, the maximum value of the cylinder-pressure change rate calculated in step S312 is divided by the piston speed calculated in step S313 to obtain an index, and damage detection for the low-pressure valve 30 is performed on the basis of the index. Accordingly, it is possible to detect a damage of the low-pressure valve 30 appropriately while excluding an influence from the piston speed.

Further, in an embodiment, a normalized value obtained by using the piston speed $V_{ref}$ at a predetermined position of the piston may be used as an index to be calculated in step S314.

The normalized value is represented by an expression of $(dP/dt)_{max} \times V_{ref}/V^*$, where $(dP/dt)_{max}$ is the maximum value of the cylinder-pressure change rate, $V_{ref}$ is the speed of the piston at a predetermined position, and $V^*$ is the speed of the piston at the time when the cylinder-pressure change rate is at the maximum value $(dP/dt)_{max}$.

As described above, a normalized value, which is an index of the same dimension as the cylinder-pressure change rate, is obtained by using the piston speed $V_{ref}$ at a predetermined position of the piston 22, and thereby it is possible to evaluate a damage of the low-pressure valve from a parameter of the same dimension as the cylinder-pressure change rate by using the normalized value.

For the predetermined position of the piston 22 described above, a representative piston position (e.g. an average position of the piston 22 at which the cylinder-pressure change rate reaches its maximum) can be selected.

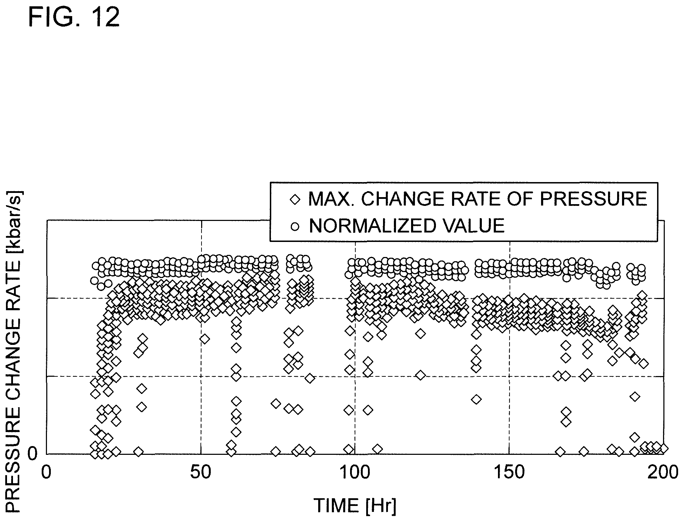

FIG. 12 is a graph comparing the maximum value of the cylinder-pressure change rate calculated in step S301 (or step S311) on the basis of a result of pressure detection for one of the cylinders 20 of the hydraulic machine (hydraulic motor 10) to the normalized value (index) of the maximum value of the cylinder-pressure change rate calculated in step S314 from the same result of pressure detection.

As shown in FIG. 12, in a period of x-axis in the graph, the normalized value (index) obtained by excluding the speed of the piston 22 has a relatively small change rate with respect to time, whereas the maximum value of the cylinder-pressure change rate is greatly varied as compared to the normalized value (index). Accordingly, it is possible to evaluate a damage of the low-pressure valve 30 more appropriately by using the normalized value (index).

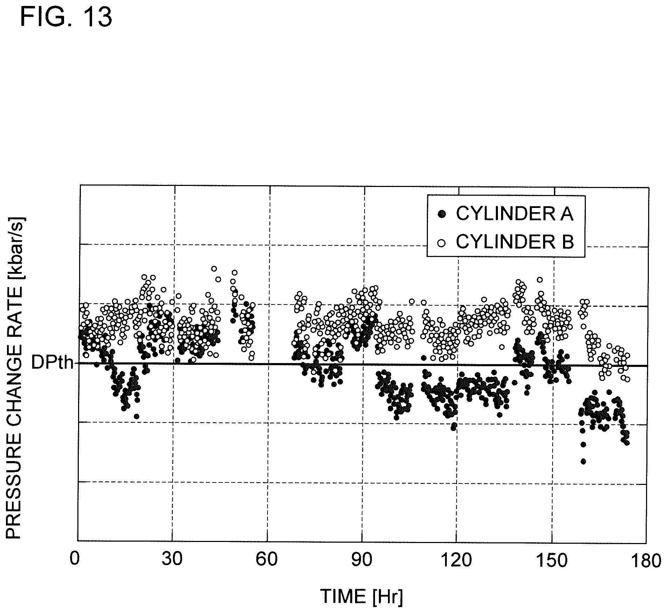

FIG. 13 is a graph comparing the normalized value (index) of the maximum value of the cylinder-pressure change rate for two cylinders A, B of a hydraulic machine (hydraulic motor 10).

As shown in FIG. 13, in a period of x-axis in the graph, the normalized value (index) of the maximum value of the cylinder-pressure change rate is generally smaller for the cylinder A than for the cylinder B.

The hydraulic machine (hydraulic motor 10) was stopped to measure an amount of abrasion of the valve body 48 of the low-pressure valve 30 for the cylinders A, B, and it was found that the maximum abrasion depth is several times greater for the cylinder A than for the cylinder B.

Accordingly, it can be said that, the smaller the index (normalized value) of the maximum value of the cylinder-pressure change rate, the greater the development of a damage (abrasion) of the valve body 48 of the low-pressure valve 30.

Thus, it is possible to perform damage detection on the low-pressure valve 30 appropriately by setting a suitable threshold for the index (normalized value) of the maximum value of the cylinder-pressure change rate, and comparing the threshold to the index (normalized value) of the maximum value of the cylinder-pressure change rate calculated on the basis of the pressure measurement result in step S1.

It should be noted that, in relation to the maximum value of the cylinder-pressure change rate or the index (normalized value) of the maximum value, a threshold may be set individually for each low-pressure valve 30.

For instance, in some embodiments, the maximum value of the cylinder-pressure change rate in an initial state (beginning of usage) of the low-pressure valve 30 may be obtained, and the threshold may be determined on the basis of the obtained maximum value of the cylinder-pressure change rate. For instance, the maximum value of the cylinder-pressure change rate or the index (normalized value) thereof that is larger by a predetermined ratio than that of an initial state of the low-pressure valve 30 may be used as a threshold (e.g. $DP_{th}$ in FIG. 13).

As described above, a threshold is determined on the basis of the maximum value of the cylinder-pressure change rate in an initial state of the low-pressure valve 30, and thereby it is possible to set an appropriate threshold individually for each low-pressure valve 30.

Further, in an embodiment, the normalized value as the index calculated in step S314 may be obtained from the following expression:

$$\text{Normalized value} = (dP/dt)_{max} \times V_{ref} \times (N/N_{ref})/V^{*}$$

where $(dP/dt)_{max}$ is the maximum value of the cylinder-pressure change rate, Vref is a speed at a predetermined position of the piston 22 and at a predetermined rotation speed $N_{ref}$, N is a rotation speed of the rotor shaft 32, and V* is a speed of the piston at the time when the cylinder-pressure change rate reaches the maximum value $(dP/dt)_{max}$.

For instance, if the rotation speed of the rotor shaft is variable, it is possible to obtain a normalized value excluding an influence from the rotation speed by using the above expression. Accordingly, it is possible to evaluate a damage of the low-pressure valve appropriately on the basis of the normalized value calculated by using the above expression.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

**Claims**

1. A method of diagnosing a hydraulic machine (10) which comprises a rotor shaft (32), a cylinder (20), a piston (22) forming a working chamber (24) together with the cylinder (20), and a high-pressure valve (28) and a low-pressure valve (30) provided for the working chamber (24), and which is configured to perform conversion between rotational motion of the rotor shaft (32) and reciprocal motion of the piston (22), the method comprising:

   a pressure-measuring step (S1) of detecting a pressure of the working chamber (24); and
   a damage-detecting step (S3) of detecting a damage of the low-pressure valve (30) on the basis of a pressure detection result obtained in the pressure-measuring step (S1),
   wherein the low-pressure valve (30) is a poppet valve which is disposed between a low-pressure line (14) of the hydraulic machine (10) and the working chamber (24), and which is for controlling a communicating state between the low-pressure line (14) and the working chamber (24),
   wherein the damage-detecting step (S3) comprises detecting the damage of the low-pressure valve (30) on the basis of a change rate of a pressure of the working chamber (24) in each cycle of the reciprocal motion of the piston (22),
   **characterised in that**, the damage-detecting step (S3) comprises detecting the damage of the low-pressure valve (30) on the basis of an index obtained by dividing the maximum value of the change rate of the pressure of the working chamber (24), in each cycle of the reciprocal motion of the piston (22), by a speed of the piston (22) at the time when the change rate of the pressure of the working chamber (24) is at the maximum value, and
   wherein the index is a normalized value represented by an expression:

$$(dP/dt)_{max} \times Vref / V^*$$

where $(dP/dt)_{max}$ is the maximum value of the change rate of the pressure of the working chamber (24), $V_{ref}$ is a speed of the piston (22) at a predetermined position, and $V^*$ is the speed of the piston (22) at the time when the change rate of the pressure of the working chamber (24) is at the maximum value $(dP/dt)_{max}$.

2. The method of diagnosing a hydraulic machine (10) according to claim 1,
   wherein the damage-detecting step (S3) comprises determining that a damage of the low-pressure valve (30) exists if the maximum value of the change rate of the pressure of the working chamber (24) or the index is at a threshold or less.

3. The method of diagnosing a hydraulic machine (10) according to claim 1 or 2, further comprising a threshold-setting step of setting a threshold on the basis of a maximum value of the change rate of the pressure of the working chamber (24) in an initial state of the low-pressure valve (30),
   wherein the damage-detecting step (S3) comprises detecting the damage of the low-pressure valve (30) on the basis of a result of comparison between the maximum value of the change rate of the pressure of the working chamber (24) or the index and the threshold determined in the threshold-setting step.

4. The method of diagnosing a hydraulic machine (10) according to any one of claims 1 to 3,
   further comprising permitting the cylinder (20) corresponding to the low-pressure valve (30) to be in an inactive state of not generating a displacement, or replacing the low-pressure valve (30), if a damage of the low-pressure valve (30) is detected in the damage-detecting step (S3).

5. A diagnosis system (101) for a hydraulic machine (10) which comprises a rotor shaft (32), a cylinder (20), a piston (22) forming a working chamber (24) together with the cylinder (20), and a high-pressure valve (28) and a low-pressure valve (30) provided for the working chamber (24), and which is configured to perform conversion between rotational motion of the rotor shaft (32) and reciprocal motion of the piston (22), the diagnosis system (101) comprising:

   a pressure sensor (72) for detecting a pressure of the working chamber (24); and
   a damage-detecting part (102) configured to detect a damage of the low-pressure valve (30) on the basis of a detection result obtained by the pressure sensor (72),
   wherein the low-pressure valve (30) is a poppet valve which is disposed between a low-pressure line (14) of the hydraulic machine (10) and the working chamber (24) and which is for controlling a communicating state between the low-pressure line (14) and the working chamber (24),
   wherein the damage-detecting part (102) is configured to detect the damage of the low-pressure valve (30) on the basis of a change rate of a pressure of the working chamber (24) in each cycle of the reciprocal motion of the piston (22),
   **characterised by** that, the damage-detecting part (102) is configured to detect the damage of the low-pressure valve (30) on the basis of an index obtained by dividing the maximum value of the change rate of the pressure of the working chamber (24), in each cycle of the reciprocal motion of the piston (22), by a speed of the piston (22) at the time when the change rate of the pressure of the working chamber (24) is at the maximum value, and wherein the index is a normalized value represented by an expression:

$$(dP/dt)_{max} \times Vref / V^*$$

   where $(dP/dt)_{max}$ is the maximum value of the change rate of the pressure of the working chamber (24), $V_{ref}$ is a speed of the piston (22) at a predetermined position, and $V^*$ is the speed of the piston (22) at the time when the change rate of the pressure of the working chamber (24) is at the maximum value $(dP/dt)_{max}$.

6. The diagnosis system (101) for a hydraulic machine (10) according to claim 5,
   wherein the damage-detecting part (102) is configured to determine that a damage of the low-pressure valve (30) exists if the maximum value of the change rate of the pressure of the working chamber (24) or the index is at a threshold or less.

7. The diagnosis system (101) for a hydraulic machine (10) according to claim 5 or 6, further comprising a threshold-setting part (104) configured to set a threshold on the basis of a maximum value of the change rate of the pressure of the working chamber (24) in an initial state of the low-pressure valve (30),
wherein the damage-detecting part (102) is configured to detect the damage of the low-pressure valve (30) on the basis of a result of comparison between the maximum value of the change rate of the pressure of the working chamber (24) or the index and the threshold determined by the threshold-setting part (104).

8. The diagnosis system (101) for a hydraulic machine (10) according to any one of claims 5 to 7,
wherein, if a damage of the low-pressure valve (30) is detected by the damage-detecting part (102), the cylinder (20) corresponding to the low-pressure valve (30) is brought into an inactive state of not generating a displacement.

9. A hydraulic machine (10), comprising:

> a rotor shaft (32);
> a cylinder (20);
> a piston (22) forming a working chamber (24) together with the cylinder (20);
> a high-pressure valve (28) and a low-pressure valve (30) provided for the working chamber (24); and
> the diagnosis system (101) according to any one of claims 5 to 8.

10. A renewable-energy type power generating apparatus (1), comprising:

> a rotor (3) configured to receive renewable energy to rotate;
> a hydraulic pump (8) configured be driven by the rotor (3) to pressurize working oil;
> a hydraulic motor (10) configured to be driven by the working oil pressurized by the hydraulic pump (8);
> a high-pressure line (12) connecting an outlet of the hydraulic pump (8) and an inlet of the hydraulic motor (10);
> a low-pressure line (14) connecting an outlet of the hydraulic motor (10) and an inlet of the hydraulic pump (8); and
> a generator (16) configured to be driven by the hydraulic motor (10),
> wherein at least one of the hydraulic pump (8) or the hydraulic motor (10) is the hydraulic machine according to claim 9.

**Patentansprüche**

1. Ein Verfahren zur Diagnose einer hydraulischen Maschine (10), die eine Rotorwelle (32), einen Zylinder (20), einen Kolben (22), welcher zusammen mit dem Zylinder (20) eine Arbeitskammer (24) bildet, und ein Hochdruckventil (28) sowie ein Niederdruckventil (30), die für die Arbeitskammer (24) vorgesehen sind, aufweist, und die konfiguriert ist, um eine Umwandlung zwischen einer Rotationsbewegung der Rotorwelle (32) und einer Hin- und Her-Bewegung des Kolbens (22) auszuführen, wobei das Verfahren aufweist:

> einen Druckmessschritt (S1) des Erfassens eines Drucks der Arbeitskammer (24), und
> einen Beschädigungs-Erfassungsschritt (S3) des Erfassens einer Beschädigung des Niederdruckventils (30) auf der Basis eines in dem Druckmessschritt (S1) erhaltenen Druckerfassungsergebnisses,
> wobei das Niederdruckventil (30) ein Tellerventil ist, das zwischen einer Niederdruckleitung (14) der hydraulischen Maschine (10) und der Arbeitskammer (24) angeordnet ist, und das zum Steuern eines Verbindungszustands zwischen der Niederdruckleitung (14) und der Arbeitskammer (24) dient,
> wobei der Beschädigungs-Erfassungsschritt (S3) ein Erfassen der Beschädigung des Niederdruckventils (30) auf der Basis einer Änderungsrate eines Drucks der Arbeitskammer (24) in jedem Zyklus der Hin- und Her-Bewegung des Kolbens (22) aufweist,
> **dadurch gekennzeichnet, dass**
> der Beschädigungs-Erfassungsschritt (S3) ein Erfassen der Beschädigung des Niederdruckventils (30) auf der Basis eines Index aufweist, der erhalten ist durch Teilen des Maximalwerts der Änderungsrate des Drucks der Arbeitskammer (24), in jedem Zyklus der Hin- und Her-Bewegung des Kolbens (22), durch eine Geschwindigkeit des Kolbens (22) zu der Zeit, wenn die Änderungsrate des Drucks der Arbeitskammer (24) bei dem Maximalwert ist, und
> wobei der Index ein normalisierter Wert ist, der durch einen Ausdruck angegeben ist:

$$(dP/dt)_{max} \times Vref / V^*$$

wobei (dP/dt)$_{max}$ der Maximalwert der Änderungsrate des Drucks der Arbeitskammer (24, Vref eine Geschwindigkeit des Kolbens (22) bei einer vorbestimmten Position, und V* die Geschwindigkeit des Kolbens (22) zu der Zeit, wenn die Änderungsrate des Drucks der Arbeitskammer (24) bei dem Maximalwert (dP/dt)$_{max}$ ist, ist.

2.  Das Verfahren zur Diagnose einer hydraulischen Maschine (10) gemäß Anspruch 1,
    wobei der Beschädigungs-Erfassungsschritt (S3) ein Bestimmen umfasst, dass eine Beschädigung des Niederdruckventils (30) vorliegt, wenn der Maximalwert der Änderungsrate des Drucks der Arbeitskammer (24) oder der Index bei einem Schwellenwert oder darunter ist.

3.  Das Verfahren zur Diagnose einer hydraulischen Maschine (10) gemäß Anspruch 1 oder 2, ferner mit einem Schwellenwert-Einstellschritt des Einstellens eines Schwellenwerts auf der Basis eines Maximalwerts der Änderungsrate des Drucks der Arbeitskammer (24) in einem Ausgangszustand des Niederdruckventils (30),
    wobei der Beschädigungs-Erfassungsschritt (S3) ein Erfassen der Beschädigung des Niederdruckventils (30) auf der Basis eines Ergebnisses eines Vergleichs zwischen dem Maximalwert der Änderungsrate des Drucks der Arbeitskammer (24) oder des Index mit dem in dem Schwellenwert-Einstellschritt bestimmten Schwellenwert aufweist.

4.  Das Verfahren zur Diagnose einer hydraulischen Maschine (10) gemäß einem der Ansprüche 1 bis 3,
    ferner mit einem Zulassen, dass der dem Niederdruckventil (30) entsprechende Zylinder (20) in einem inaktiven Zustand ist, bei dem keine Verdrängung erzeugt wird, oder einem Ersetzen des Niederdruckventils (30), wenn eine Beschädigung des Niederdruckventils (30) in dem Beschädigungs-Erfassungsschritt (S3) erfasst wird.

5.  Ein Diagnosesystem (101) für eine hydraulische Maschine (10), die eine Rotorwelle (32), einen Zylinder (20), einen Kolben (22), welcher zusammen mit dem Zylinder (20) eine Arbeitskammer (24) bildet, und ein Hochdruckventil (28) sowie ein Niederdruckventil (30), die für die Arbeitskammer (24) vorgesehen sind, aufweist, und die konfiguriert ist, um eine Umwandlung zwischen einer Rotationsbewegung der Rotorwelle (32) und einer Hin- und Her-Bewegung des Kolbens (22) auszuführen, wobei das Diagnosesystem (101) aufweist:

    einen Drucksensor (72) zum Erfassen eines Drucks der Arbeitskammer (24), und
    ein Beschädigungs-Erfassungsteil (102), das konfiguriert ist, um eine Beschädigung des Niederdruckventils (30) auf der Basis eines Erfassungsergebnisses, das durch den Drucksensor (72) erhalten ist, zu erfassen,
    wobei das Niederdruckventil (30) ein Tellerventil ist, das zwischen einer Niederdruckleitung (14) der hydraulischen Maschine (10) und der Arbeitskammer (24) angeordnet ist und das zum Steuern eines Verbindungszustands zwischen der Niederdruckleitung (14) und der Arbeitskammer (24) dient,
    wobei das Beschädigungs-Erfassungsteil (102) konfiguriert ist, um die Beschädigung des Niederdruckventils (30) auf der Basis einer Änderungsrate eines Drucks der Arbeitskammer (24) bei jedem Zyklus der Hin- und Her-Bewegung des Kolbens (22) zu erfassen,
    **dadurch gekennzeichnet, dass**
    das Beschädigungs-Erfassungsteil (102) konfiguriert ist, um die Beschädigung des Niederdruckventils (30) auf der Basis eines Index zu erfassen, der erhalten ist durch Teilen des Maximalwerts der Änderungsrate des Drucks der Arbeitskammer (24), in jedem Zyklus der Hin- und Her-Bewegung des Kolbens (22), durch eine Geschwindigkeit des Kolbens (22) zu der Zeit, wenn die Änderungsrate des Drucks der Arbeitskammer (24) bei dem Maximalwert ist, und
    wobei der Index ein normalisierter Wert ist, der durch einen Ausdruck angegeben ist:

$$(dP/dt)_{max} \; x \; Vref \; / \; V^*$$

    wobei (dP/dt)$_{max}$ der Maximalwert der Änderungsrate des Drucks der Arbeitskammer (24, Vref eine Geschwindigkeit des Kolbens (22) bei einer vorbestimmten Position, und V* die Geschwindigkeit des Kolbens (22) zu der Zeit, wenn die Änderungsrate des Drucks der Arbeitskammer (24) bei dem Maximalwert (dP/dt)$_{max}$ ist, ist.

6.  Das Diagnosesystem (101) für eine hydraulische Maschine (10) gemäß Anspruch 5,
    wobei das Beschädigungs-Erfassungsteil (102) konfiguriert ist, um zu bestimmen, dass eine Beschädigung des Niederdruckventils (30) vorliegt, wenn der Maximalwert der Änderungsrate des Drucks der Arbeitskammer (24) oder der Index bei einem Schwellenwert oder darunter ist.

7.  Das Diagnosesystem (101) für eine hydraulische Maschine (10) gemäß Anspruch 5 oder 6, ferner mit einem Schwellenwert-Einstellteil (104), das konfiguriert ist, um einen Schwellenwert auf der Basis eines Maximalwerts der Änderungsrate des Drucks der Arbeitskammer (24) in einem Ausgangszustand des Niederdruckventils (30) einzustellen, wobei das Beschädigungs-Erfassungsteil (102) konfiguriert ist, um die Beschädigung des Niederdruckventils (30) auf der Basis eines Ergebnisses eines Vergleichs zwischen dem Maximalwert der Änderungsrate des Drucks der Arbeitskammer (24) oder des Index mit dem durch das Schwellenwert-Einstellteil (104) bestimmten Schwellenwert zu erfassen.

8. Das Diagnosesystem (101) für eine hydraulische Maschine (10) gemäß einem der Ansprüche 5 bis 7, wobei, wenn eine Beschädigung des Niederdruckventils (30) durch das Beschädigungs-Erfassungsteil (102) erfasst wird, der Zylinder (20) entsprechend dem Niederdruckventil (30) in einen inaktiven Zustand gebracht wird, bei dem er keine Verdrängung erzeugt.

9. Eine hydraulische Maschine (10) mit:

einer Rotorwelle (32),
einem Zylinder (20),
einem Kolben (22), der zusammen mit dem Zylinder (20) eine Arbeitskammer (24) bildet,
einem Hochdruckventil (28) und einem Niederdruckventil (30), die für die Arbeitskammer (24) vorgesehen sind, und dem Diagnosesystem (101) gemäß einem der Ansprüche 5 bis 8.

10. Eine Stromerzeugungsvorrichtung für erneuerbare Energie (1), mit:

einem Rotor (3), der konfiguriert ist, um erneuerbare Energie zur Rotation zu empfangen,
einer hydraulischen Pumpe (8), die konfiguriert ist, um durch den Rotor (3) zum Druckbeaufschlagen von Arbeitsöl angetrieben zu werden,
einem hydraulischen Motor (10), der konfiguriert ist, um durch das von der hydraulischen Pumpe (8) mit Druck beaufschlagte Arbeitsöl angetrieben zu werden,
einer Hochdruckleitung (12), die einen Auslass der hydraulischen Pumpe (8) und einen Einlass des hydraulischen Motors (10) verbindet,
einer Niederdruckleitung (14), die einen Auslass des hydraulischen Motors (10) und einen Einlass der hydraulischen Pumpe (8) verbindet, und
einem Generator (16), der konfiguriert ist, um durch den hydraulischen Motor (10) angetrieben zu werden, wobei zumindest eine von der hydraulischen Pumpe (8) oder dem hydraulischen Motor (10) die hydraulische Maschine gemäß Anspruch 9 ist.

**Revendications**

1. Procédé pour donner un diagnostic sur une machine hydraulique, qui comprend un arbre (32) de rotor, un cylindre (20), un piston (22) formant une chambre (24) de travail ensemble avec le cylindre (20) et une soupape (28) de haute pression et une soupape (30) de basse pression prévues pour la chambre (24) de travail, et qui est configurée pour effectuer une transformation entre un mouvement de rotation de l'arbre (32) du rotor et un mouvement alternatif du piston (22), le procédé comprenant :

un stade (S1) de mesure de la pression, dans lequel on détecte une pression dans la chambre (24) de travail et un stade (S3) de détection d'un endommagement, dans lequel on détecte un endommagement de la soupape (30) de basse pression sur la base d'un résultat de détection de la pression obtenu dans le stade (S1) de mesure de la pression,
dans lequel la soupape (30) de basse pression est une soupape en champignon, qui est montée entre la ligne (14) de basse pression de la machine (10) hydraulique et la chambre (24) de travail et qui est conçue pour commander un état de communication entre la ligne (14) de basse pression et la chambre (24) de travail, dans lequel le stade (S3) de détection d'un endommagement comprend détecter l'endommagement de la soupape (30) de basse pression sur la base d'une vitesse de variation d'une pression dans la chambre (24) de travail à chaque cycle du mouvement alternatif du piston (22),
**caractérisé en ce que** le stade (S3) de détection d'un endommagement comprend détecter l'endommagement de la soupape (30) de basse pression sur la base d'un indice obtenu en divisant la valeur maximum de la vitesse de variation de la pression dans la chambre (24) de travail à chaque cycle du mouvement alternatif du piston (22) par une vitesse du piston (22) à l'instant où la vitesse de variation de la pression dans la chambre (24) de travail est à la valeur maximum et

dans lequel l'indice est une valeur normée représentée par l'expression :

$$(dP/dt)_{max} \times Vref / V^*$$

dans laquelle $(dP/dt)_{max}$ est la valeur maximum de la vitesse de variation de la pression dans la chambre (24) de travail, $V_{ref}$ est une vitesse du piston (22) à une position déterminée à l'avance et V' est la vitesse du piston (22) à l'instant où la vitesse de variation de la pression dans la chambre (24) de travail est à la valeur $(dP/dt)_{max}$ maximum.

2. Procédé pour donner un diagnostic sur une machine (10) hydraulique suivant la revendication 1, dans lequel le stade (S3) de détection d'un endommagement comprend déterminer qu'un endommagement de la soupape (30) de basse pression existe, si la valeur maximum de la vitesse de variation de la pression dans la chambre (24) de travail ou l'indice est inférieure ou égale à un seuil.

3. Procédé pour donner un diagnostic sur une machine (10) hydraulique suivant la revendication 1 ou 2, comprenant, en outre, un stade de fixation d'un seuil, dans lequel on fixe un seuil sur la base d'une valeur maximum de la vitesse de variation de la pression dans la chambre (24) de travail dans un état initial de la soupape (30) de basse pression, dans lequel le stade (S3) de détection d'un endommagement comprend détecter l'endommagement de la soupape (30) de basse pression sur la base d'un résultat d'une comparaison entre la valeur maximum de la vitesse de variation de la pression dans la chambre (24) de travail ou l'indice et le seuil déterminé dans le stade de fixation d'un seuil.

4. Procédé pour donner un diagnostic sur une machine (10) hydraulique suivant l'une quelconque des revendications 1 à 3, comprenant, en outre, le fait de permettre au cylindre (20) correspondant à la soupape (30) de basse pression d'être dans un état inactif de non production d'un déplacement, ou le fait de remplacer la soupape (30) de basse pression, si un endommagement de la soupape (30) de basse pression est détecté dans le stade (S3) de détection d'un endommagement.

5. Système (101) de diagnostic pour une machine (10) hydraulique, qui comprend un arbre (32) de rotor, un cylindre (20), un piston (22) formant une chambre (24) de travail ensemble avec le cylindre (20) et une soupape (28) de haute pression et une soupape (30) de basse pression prévue pour la chambre (24) de travail, et qui est configurée pour effectuer une transformation entre un mouvement de rotation de l'arbre (32) du rotor et un mouvement alternatif du piston (22), le système (101) de diagnostic comprenant :

   un capteur (72) de pression pour détecter une pression dans la chambre (24) de travail et
   une partie 102) de détection d'un endommagement, configurée pour détecter un endommagement de la soupape (30) de basse pression sur la base d'un résultat de détection obtenu par le capteur (72) de pression,
   dans lequel la soupape (30) de basse pression est une soupape en champignon, qui est montée entre la ligne (14) de basse pression de la machine (10) hydraulique et la chambre (24) de travail et qui est conçue pour commander un état de communication entre la ligne (14) de basse pression et la chambre (24) de travail,
   dans lequel la partie (102) de détection d'un endommagement est configurée pour détecter l'endommagement de la soupape (30) de basse pression sur la base d'une vitesse de variation d'une pression dans la chambre (24) de travail à chaque cycle du mouvement alternatif du piston (22),
   **caractérisé en ce que**
   la partie (102) de détection d'un endommagement est configurée pour détecter l'endommagement de la soupape (30) de basse pression sur la base d'un indice obtenu en divisant la valeur maximum de la vitesse de variation de la pression dans la chambre (24) de travail à chaque cycle du mouvement alternatif du piston (22) par une vitesse du piston (22) à l'instant où la vitesse de variation de la pression dans la chambre (24) de travail est à la valeur maximum et
   dans lequel l'indice est une valeur normée représentée par l'expression :

$$(dP/dt)_{max} \times Vref / V^*$$

dans laquelle (dP/dt)$_{max}$ est la valeur maximum de la vitesse de variation de la pression dans la chambre (24) de travail, V$_{ref}$ est une vitesse du piston (22) à une position déterminée à l'avance et V' est la vitesse du piston (22) à l'instant où la vitesse de variation de la pression dans la chambre (24) de travail est à la valeur (dP/dt)$_{max}$ maximum.

6. Système (101) de diagnostic pour une machine (10) hydraulique suivant la revendication 5, dans lequel la partie (102) de détection d'un endommagement est configurée pour déterminer qu'un endommagement de la soupape (30) de basse pression existe, si la valeur maximum de la vitesse de variation de la pression dans la chambre (24) de travail ou l'indice est inférieure ou égale à un seuil.

7. Système (101) de diagnostic pour une machine (10) hydraulique suivant la revendication 5 ou 6, comprenant, en outre, une partie (104) de fixation d'un seuil configurée pour fixer un seuil sur la base d'une valeur maximum de la vitesse de variation de la pression dans la chambre (24) de travail dans un état initial de la soupape (30) de basse pression, dans lequel la partie (102) de détection d'un endommagement est configurée pour détecter l'endommagement de la soupape (30) de basse pression sur la base d'un résultat d'une comparaison entre la valeur maximum de la vitesse de variation de la pression dans la chambre (24) de travail ou de l'indice et du seuil déterminé par la partie (104) de fixation d'un seuil.

8. Système (101) de diagnostic pour une machine (10) hydraulique suivant l'une quelconque des revendications 5 à 7, dans lequel, si un endommagement de la soupape (30) de basse pression est détecté par la partie (102) de détection d'un endommagement, le cylindre (20), correspondant à la soupape (30) de basse pression est mis dans un état inactif de non production d'un déplacement.

9. Machine (10) hydraulique, comprenant :

   un arbre (32) de rotor ;
   un cylindre (20) ;
   un piston (22) formant une chambre (24) de travail, ensemble avec le cylindre (20) ;
   une soupape (28) de haute pression et une soupape (30) de basse pression, prévues pour la chambre (24) de travail et
   le système (101) de diagnostic suivant l'une quelconque des revendications 5 à 8.

10. Installation (1) produisant de l'électricité de type à énergie renouvelable, comprenant :

    un rotor (3) configuré pour recevoir de l'énergie renouvelable, afin de tourner ;
    une pompe (8) hydraulique, configurée pour être entraînée par le rotor (3) pour mettre de l'huile de travail sous pression ;
    un moteur (10) hydraulique, configuré pour être entraîné par l'huile de travail mise sous pression par la pompe (8) hydraulique ;
    une ligne (12) de haute pression mettant une sortie de la pompe (8) hydraulique en communication avec une entrée du moteur (10) hydraulique ;
    une ligne (14) de basse pression mettant une sortie du moteur (10) hydraulique en communication avec une entrée de la pompe (8) hydraulique et
    une génératrice (16) configurée pour être entraînée par le moteur (10) hydraulique,
    dans lequel au moins l'un de la pompe (8) hydraulique ou du moteur (10) hydraulique est la machine hydraulique suivant la revendication 9.

FIG. 1

EP 3 211 395 B1

FIG. 2

101

100 DIAGNOSIS-CONTROL PART

20

28  72

34

30

36

24

22 { 22A
     22B

25

P

P

O

10

26

32

14

12

# FIG. 3

101

100

DIAGNOSIS-CONTROL PART

| | |
|---|---|
| PRESSURE SENSOR (72) | DAMAGE DETECTING PART (102) → VALVE CONTROL PART (106) |
| ROTATION-SPEED SENSOR (74) | THRESHOLD SETTING PART (104) |

FIG. 4

EP 3 211 395 B1

FIG. 5

EP 3 211 395 B1

FIG. 6

# FIG. 7

```
        ┌─────────────┐
        │    START    │
        └─────────────┘
               │
               ▼
   ┌───────────────────────────┐
   │ MEASURE CYLINDER PRESSURE │ ～S1
   └───────────────────────────┘
               │
               ▼
   ┌───────────────────────────┐
   │         CALCULATE         │
   │      CHANGE RATE OF       │ ～S2
   │     CYLINDER PRESSURE     │
   └───────────────────────────┘
               │
               ▼
   ┌───────────────────────────┐
   │    DETECT DAMAGE OF LPV   │ ～S3
   └───────────────────────────┘
               │
               ▼
            S4
        ╱╲
       ╱    ╲
      ╱        ╲          NO
     ╱ DAMAGE   ╲──────────────┐
     ╲ EXIST?   ╱              │
      ╲        ╱               │
       ╲    ╱                  │
        ╲╱                     │
         │ YES      S5         │
         ▼                     │
   ┌───────────────────────────┐
   │       PUT CYLINDER        │
   │   INTO INACTIVE STATE /   │
   │        REPLACE LPV        │
   └───────────────────────────┘
               │                │
               ▼◄───────────────┘
        ┌─────────────┐
        │     END     │
        └─────────────┘
```

24

# FIG. 8

```
   ╭─────────────────────────╮
   │         DAMAGE          │
   │  DETECTING STEP(S3)     │
   ╰─────────────────────────╯
              │
              ▼
   ┌─────────────────────────┐
   │       CALCULATE         │
   │   MAX. CHANGE RATE OF   │  ~S301
   │   CYLINDER PRESSURE     │
   │     FOR EACH CYCLE      │
   └─────────────────────────┘
              │
              ▼
                  S305
           ╱  MAX.  ╲
         ╱   CHANGE RATE   ╲
       ╱ OF CYLINDER PRESSURE ╲  NO
       ╲    ≤ THRESHOLD    ╱────────┐
         ╲      ?       ╱           │
           ╲        ╱               │
              │ YES      S306        │
              ▼                      │
   ┌─────────────────────────┐      │
   │    DETERMINE DAMAGE     │      │
   └─────────────────────────┘      │
              │                      │
              ▼◄─────────────────────┘
         ╭──────────╮
         │   END    │
         ╰──────────╯
```

# FIG. 9

# FIG. 10

```
        ┌─────────────────────────┐
        │   DAMAGE                 │
        │ DETECTING STEP(S3)       │
        └─────────────────────────┘
                    │
                    ▼
        ┌─────────────────────────┐
        │      CALCULATE          │
        │ MAX. CHANGE RATE OF     │────  S311
        │  CYLINDER PRESSURE      │
        │    FOR EACH CYCLE       │
        └─────────────────────────┘
                    │
                    ▼
        ┌─────────────────────────┐
        │      CALCULATE          │────  S312
        │  PISTON PHASE ANGLE     │
        └─────────────────────────┘
                    │
                    ▼
        ┌─────────────────────────┐
        │ CALCULATE PISTON SPEED  │────  S313
        └─────────────────────────┘
                    │
                    ▼
        ┌─────────────────────────┐
        │   CALCULATE INDEX       │────  S314
        └─────────────────────────┘
                    │
                    ▼                 S315
              ◇────────────◇
          ◇                    ◇
       ◇  INDEX ≤ THRESHOLD?    ◇────  NO
          ◇                    ◇
              ◇────────────◇
                    │ YES              S316
                    ▼
        ┌─────────────────────────┐
        │   DETERMINE DAMAGE      │
        └─────────────────────────┘
                    │◄─────────────────┘
                    ▼
               (   END   )
```

FIG. 11

FIG. 12

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100040470 A
- EP 2206940 A
- JP 61099833 A
- EP 2889480 A1